# EUROPEAN PATENT APPLICATION

(11) **EP 4 756 246 A1**
(43) Date of publication of application: **10.06.2026**
(21) Application number: 24848689.6
(22) Date of filing: 10.06.2024
(51) Int. Cl.: F16D 65/00, B60T 13/74, F16D 65/16, F16D 121/24, F16D 125/40, F16D 127/04, F16D 129/04

(54) **ELECTRIC BRAKE DEVICE**

(30) Priority: 31.07.2023 JP 2023124478
(71) Applicant: Astemo, Ltd., Chiyoda-ku, Tokyo 1000004 (JP)
(72) Inventor: MORITA, Hikaru, Hitachinaka-shi, Ibaraki 312-8503 (JP)
(74) Representative: Hoffmann Eitle
(86) International application number: PCT/JP2024/020998
(87) International publication number: WO 2025/028028

(57) **Abstract**

The present invention provides an electric brake apparatus having a structure that, even when some failure has occurred on an electric driving source side in a parking brake state, allows this braking state to be easily forcibly released. An electric actuator of a drum brake includes an electric motor, a rotational shaft of the electric motor, a rotation-linear motion conversion mechanism configured to allow the drum brake to be switched to a braking state or a non-braking state by converting a rotation from the rotational shaft into a linear motion, and a housing containing the rotational shaft. The housing includes a braking forcible release mechanism capable of forcibly releasing the braking state into the non-braking state. Due to this braking forcible release mechanism, even when some failure has occurred on an electric motor side in a parking brake state, this braking state can be easily forcibly released.

## Description

### TECHNICAL FIELD

The present invention relates to an electric brake apparatus such as a disk brake and a drum brake used to brake a vehicle.

### BACKGROUND ART

For example, in a vehicle brake apparatus disclosed in PTL 1, an actuator case thereof is configured to allow a manual operation tool to be inserted therethrough so as to make it possible to rotationally drive a rotational member with a manual operation from outside this actuator case. Then, when some failure has occurred on an electric driving source side at the time of parking brake, the parking brake can be released to allow the vehicle to move by inserting the manual operation tool through the actuator case to rotate the rotational member.

### CITATION LIST

### PATENT LITERATURE

PTL 1: Japanese Patent Application Laid-Open No. 2019-48587

### SUMMARY OF INVENTION

### TECHNICAL PROBLEM

In the above-described vehicle brake apparatus disclosed in PTL 1, a holding hole to which the tip of the manual operation tool is engaged, i.e., a holding hole hexagonally shaped in a front view is formed on the rotational member (a pinion gear), but this structure leads to a cost increase. Further, the vehicle brake apparatus disclosed in PTL 1 necessitates a dedicated tool for breaking through a portion surrounded by a specified tubular portion that faces the holding hole, and this also leads to a cost increase.

In addition, the vehicle brake apparatus disclosed in PTL 1 is designed in such a manner that a hole for accessing the manual operation tool is formed by breaking through the portion surrounded by the specified tubular portion that faces the holding hole. In this case, the holding hole may be covered with the broken remains, raising such a problem that the manual operation tool cannot be easily engaged with the holding hole via the access hole, necessitating, for example, work of removing the covering remains and thus reducing work efficiency as a result, which leaves room for improvement.

Then, in consideration of the above-described problem, one of objects of the present invention is to provide an electric brake apparatus having a structure that, even when some failure has occurred on an electric driving source side in a parking brake state, allows this braking state to be easily forcibly released.

### SOLUTION TO PROBLEM

As a means for solving the above-described problem, an electric brake apparatus according to the present invention includes an electric motor, a rotational member to which a rotation from the electric motor is transmitted, a rotation-linear motion conversion mechanism configured to allow the electric brake apparatus to be switched to a braking state or a non-braking state by converting a rotation from the rotational member into a linear motion, and a housing containing the rotational member, The housing includes a braking forcible release mechanism capable of forcibly releasing the braking state into the non-braking state.

The electric brake apparatus according to one aspect of the present invention has a structure that, even when some failure has occurred on an electric driving source side in a parking brake state, allows this braking state to be easily forcibly released.

### BRIEF DESCRIPTION OF DRAWINGS

Fig. 1 is a front view of a drum brake according to embodiments of the present invention.
Fig. 2 is a cross-sectional view of an electric actuator employed for the drum brake according to the present embodiments.
Fig. 3 is a perspective view around a protrusion portion of a rotational shaft of an electric motor employed for the electric actuator illustrated in Fig. 2.
Fig. 4 is a perspective view of an engagement portion of a braking forcible release mechanism according to a first embodiment that is employed for the electric actuator illustrated in Fig. 2.
Fig. 5 is a perspective view of an operation portion of the braking forcible release mechanism according to the first embodiment that is employed for the electric actuator illustrated in Fig. 2.
Figs. 6 are cross-sectional views illustrating, step by step, the function of the braking forcible release mechanism according to the first embodiment that is employed for the electric actuator illustrated in Fig. 2.
Figs. 7 are cross-sectional views illustrating, step by step, the function of a braking forcible release mechanism according to a second embodiment.
Figs. 8 are cross-sectional views illustrating, step by step, the function of a braking forcible release mechanism according to a third embodiment.

### DESCRIPTION OF EMBODIMENTS

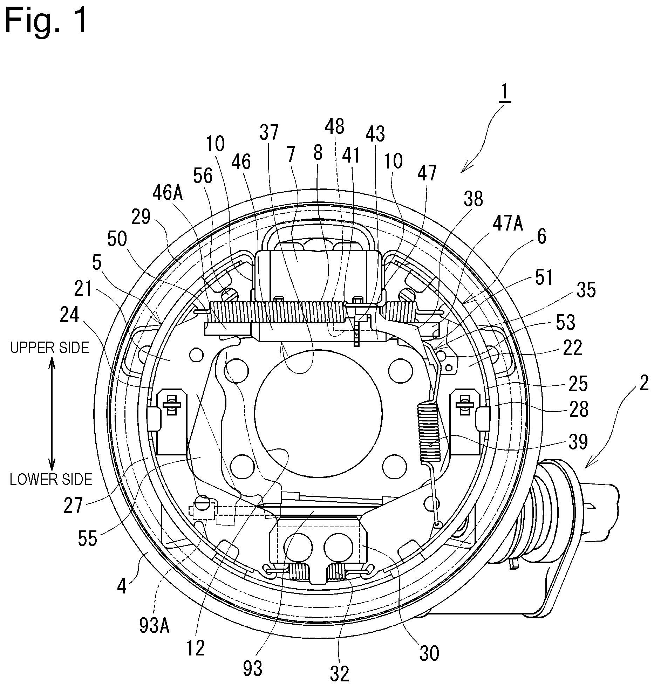

In the following description, embodiments of the present invention will be described in detail based on Figs. 1 to 8.

Referring to Fig. 1, a drum brake 1 as an electric brake apparatus according to the embodiments of the present invention includes an electric actuator 2. This drum brake 1 includes a backplate 4, a pair of first and second brake shoes 5 and 6, a wheel cylinder 7, a return spring 8, and the electric actuator 2. The backplate 4 is fixedly provided to a non-rotational portion of an axle (an axle shaft) of a vehicle. The first and second brake shoes 5 and 6 are provided on the inner surface of this backplate 4, and are arcuately shaped. The wheel cylinder 7 includes pistons 10 and 10 with which one ends of the first and second brake shoes 5 and 6 are in abutment, respectively. The return spring 8 is provided between the first and second brake shoes 5 and 6. The electric actuator 2 is driven when a parking brake is actuated.

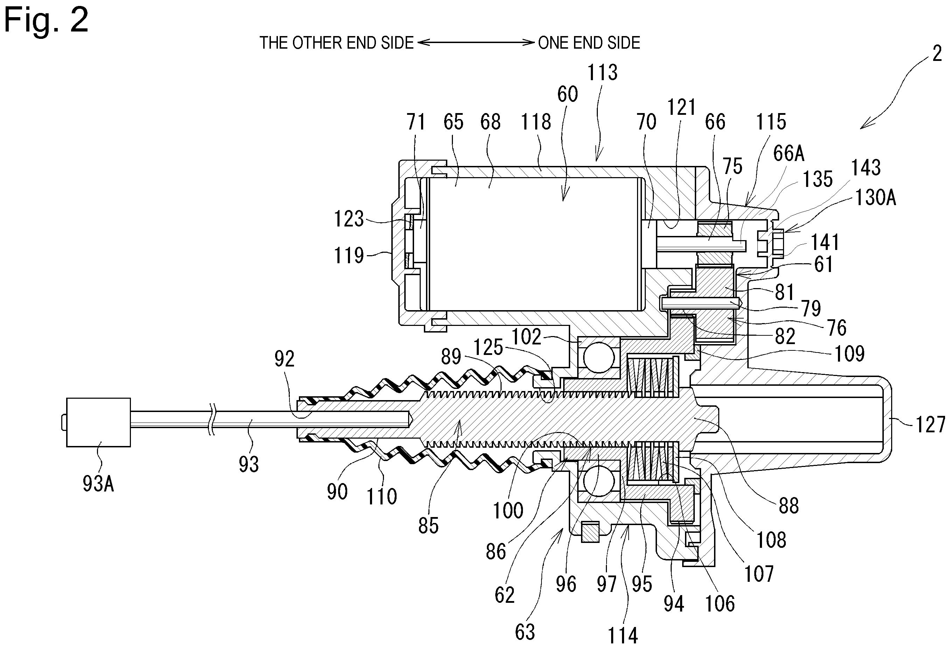

Referring Fig. 1, an axle insertion hole 12 is formed at the radial central portion of the backplate 4. The axle is inserted through the axle insertion hole 12. Attachment tubular portions (not illustrated) are each integrally provided on the back surface of the backplate 4 in a protruding manner. The attachment tubular portions are each used to mount the electric actuator 2, which will be described in detail below. The attachment tubular portion is provided in a manner protruding form the back surface of the backplate 4 rearward or forward and inward in the vehicle width direction. The electric actuator 2 is fixed by being inserted in this attachment tubular portion, starting from a bellows-like boot 110 (refer to Fig. 2) side of the electric actuator 2.

Referring to Fig. 1, identically shaped members are inverted and used as the first and second brake shoes 5 and 6. The first and second brake shoes 5 and 6 include first and second shoe webs 21 and 22, first and second circular arc-shaped rims 24 and 25, and first and second linings 27 and 28, respectively. The first and second shoe webs 21 and 22 are each disposed in parallel with the backplate 4. The first and second rims 24 and 25 are disposed on the outer edges of these first and second shoe webs 21 and 22 in a direction orthogonal to these first and second shoe webs 21 and 22. The first and second linings 27 and 28 are glued to the outer peripheral surfaces of these first and second rims 24 and 25.

One ends (upper ends) of the first and second shoe webs 21 and 22 of the first and second brake shoes 5 and 6 are in abutment with the pair of pistons 10 and 10 of the wheel cylinder 7, respectively. On the other hands, the other ends (lower ends) of the first and second shoe webs 21 and 22 of the first and second brake shoes 5 and 6 are supported by an anchor block 30, which serves as a fulcrum when the first and second brake shoes 5 and 6 expand and contract. The wheel cylinder 7 is disposed on an upper portion of the backplate 4. The anchor block 30 is disposed on a lower portion of the backplate 4. Then, when being actuated as a normal hydraulic brake, the drum brake 1 brakes the vehicle by spreading open the first and second brake shoes 5 and 6 to the radially outer side of the backplate 4 with the aid of the actuation of the wheel cylinder 7 and causing the first and second linings 27 and 28 on the outer peripheries to slide on a brake drum 29 rotating together with the wheel.

Referring to Fig. 1, the return spring 8 is stretched between the first brake shoe 5 and the second brake shoe 6 on the radially inner side of the wheel cylinder 7. The first and second brake shoes 5 and 6 are constantly biased in a diameter reduction side by this return spring 8. Coil springs 32 are provided between the lower end portions of the first and second shoe webs 21 and 22 of the first and second brake shoes 5 and 6. The coil springs 32 bias the lower end portions of the first and second shoe webs 21 and 22 toward the anchor block 30 side. Further, a braking clearance automatic adjustment apparatus 35 (a so-called auto adjuster) is disposed on a closer side of the return spring 8 to the center of the backplate 4. The braking clearance automatic adjustment apparatus 35 regulates the diameter reduction positions of the first and second brake shoes 5 and 6 to automatically adjust a braking clearance between the first and second brake shoes 5 and 6 and the brake drum 29.

The braking clearance automatic adjustment apparatus 35 includes a contraction position regulation strut 37, an adjustment lever 38, and an adjustment spring 39. The contraction position regulation strut 37 is provided between the first and second shoe webs 21 and 22 of the first and second brake shoes 5 and 6, and extends according to a rotation of an adjustment gear 41. The adjustment lever 38 includes a feed claw 43 engaged with the adjustment gear 41, and is rotatably supported on the second shoe web 22 of the second brake shoe 6. The adjustment spring 39 biases the adjustment lever 38 in a rotational direction of the adjustment gear 41 for extending the contraction position regulation strut 37.

The contraction position regulation strut 37 functions to regulate the contraction positions of the first and second brake shoes 5 and 6. The contraction position regulation strut 37 includes a first rod 46, a second rod 47, and an adjustment bolt 48. The first rod 46 includes a first engagement portion 46A engaged with an upper portion of the first shoe web 21 of the first brake shoe 5. The second rod 47 includes a second engagement portion 47A engaged with an upper portion of the second shoe web 22 of the second brake shoe 6. One end portion of the adjustment bolt 48 is axially relatively movably inserted in the first rod 46, and the other end portion of the adjustment bolt 48 is coaxially threadedly engaged with the second rod 47. The first and second rods 46 and 47 are coaxially disposed. The adjustment gear 41 is disposed between the first rod 46 and the second rod 47 on the outer periphery of the adjustment bolt 48.

A first engagement recessed portion 50 is provided on the upper portion of the first shoe web 21 of the first brake shoe 5. The first engagement portion 46A of the first rod 46 is engaged with the first engagement recessed portion 50. A second engagement recessed portion 51 is provided on the upper portion of the second shoe web 22 of the second brake shoe 6. The second engagement portion 47A of the second rod 47 is engaged with the second engagement recessed portion 51. The adjustment lever 38 is rotatably supported on the second shoe web 22 of the second brake shoe 6 via a support shaft 53. The adjustment spring 39 is provided between the second shoe web 22 of the second brake shoe 6 and the adjustment lever 38. The elastic force of the adjustment spring 39 is set to be weaker than the elastic force of the return spring 8.

Then, in the braking clearance automatic adjustment apparatus 35, if the first and second brake shoes 5 and 6 expand by a predetermined value or more due to wear of the first and second linings 27 and 28 when being expandably actuated due to the actuation of the wheel cylinder 7, the adjustment lever 38 rotates around the axis of the support shaft 53 due to the basing force of the adjustment spring 39, and a rotation of the adjustment gear 41 due to that causes an increase/correction of the effective length of the contraction position regulation strut 37.

The drum brake 1 includes a parking brake lever 55. This parking brake lever 55 is connected to a brake cable 93 of the electric actuator 2. The parking brake lever 55 extends along the vertical direction so as to partially overlap the first shoe web 21 of the first brake shoe 5 in a front view. The upper end portion of the parking brake lever 55 is coupled to an upper portion of the first shoe web 21 of the first brake shoe 5 via a pin 56.

The upper portion of the parking brake lever 55 is engaged with the first engagement portion 46A of the contraction position regulation strut 37. An engagement piece 93A of the brake cable 93 of the electric actuator 2 is connected to a lower portion of the parking brake lever 55. In sum, the parking brake lever 55 can be rotated in a forward direction, i.e., a braking direction or in a reserve direction, i.e., a braking release direction around the pin 56 by pulling or paying out the brake cable 93 due to actuation of the electric actuator 2.

Then, when the parking brake of the vehicle is actuated, the brake cable 93 is pulled due to the actuation of the electric actuator 2, and the parking brake lever 55 is rotated in the counterclockwise direction in Fig. 1 around the pin 56. As a result, according to the rotation of the parking brake lever 55, first, a force in a direction for placing the second lining 28 into pressure contact with the inner peripheral surface of the brake drum 29 is applied to the second brake shoe 6 via the contraction position regulation strut 37.

Subsequently, when the parking brake lever 55 is further rotated in the counterclockwise direction in Fig. 1, the parking brake lever 55 is rotated in the counterclockwise direction around the engagement point of the contraction position regulation strut 37 with the first engagement portion 46A, and, as a result, the first brake shoe 5 is expandably actuated via the pin 56 to place the first lining 27 of the first brake shoe 5 into pressure contact with the inner periphery of the brake drum 29, thereby maintaining a braking state. This means that, due to the rotational action of the parking brake lever 55, the first and second linings 27 and 28 of the first and second brake shoes 5 and 6 are actuated to braking positions where they are in pressure contact with the inner periphery of the brake drum 29, and a parking brake state can be acquired in this state.

On the other hand, when the parking brake is released, the brake cable 93 is paid out due to the actuation of the electric actuator 2, and the parking brake lever 55 is rotated around the pin 56 in the clockwise direction in Fig. 1 due to the biasing force of the return spring 8, by which the first and second brake shoes 5 and 6 return to the initial positions to release the braking state.

Next, the electric actuator 2 will be described in detail based on Figs. 2 to 8. In the following description, for convenience, the electric actuator 2 will be described in detail referring to the right side and the left side in Fig. 2 as one end side and the other end side, respectively, and also assuming in the other drawings that the directions of the one end side and the other end side are as indicated therein as necessary. The electric actuator 2 is intended to actuate the parking brake. Referring to Fig. 2, the electric actuator 2 includes an electric motor 60, a reduction gear mechanism 61, a rotation-linear motion conversion mechanism 62, and a housing 63. The housing 63 contains the electric motor 60, reduction gear mechanism 61, and rotation-linear motion conversion mechanism 62.

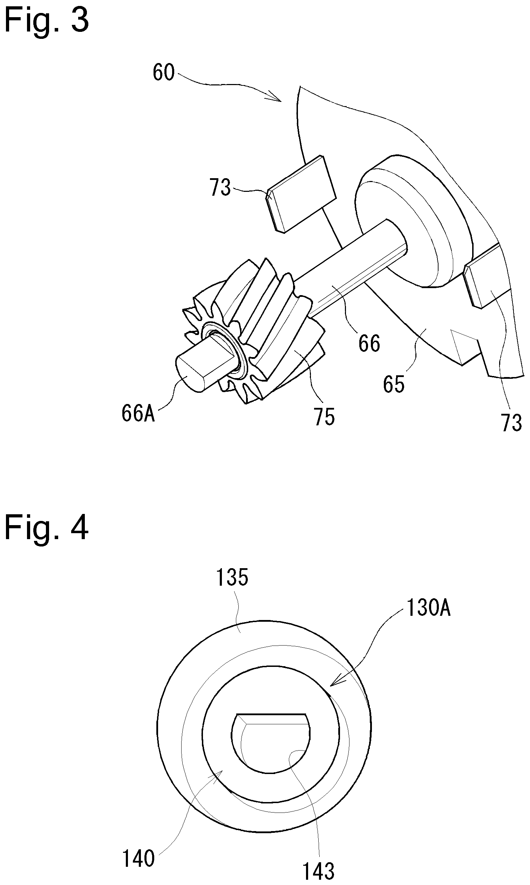

Referring to Fig. 2, the electric motor 60 includes a columnar main body portion 65, and a rotational shaft 66 extending from this main body portion 65 toward the one end side and the other end side. The rotational shaft 66 corresponds to a rotational member. A cylindrical first bearing portion 70 is provided at one end portion of a motor case 68 of the electric motor 60 in a protruding manner. The first bearing portion 70 rotatably supports the rotational shaft 66. One end portion of the rotational shaft 66 protrudes out of the one end portion of the motor case 68 through the first bearing portion 70. On the other hand, a bottomed cylindrical second bearing portion 71 is provided at the other end portion of the motor case 68 in a protruding manner. The second bearing portion 70 rotatably supports the other end portion of the rotational shaft 66. The main body portion 65 of the electric motor 60 is contained in a motor containing main body 113 of the housing 63. A reference numeral 73 in Fig. 3 indicates a terminal portion.

The motor containing main body 113 includes a bottomed cylindrical motor containing portion 118 and a cover member 119. The cover member 119 closes an opening portion of the motor containing portion 118 on the other end side. An insertion hole 121 is formed through the bottom wall portion of the motor containing portion 118. The one end portion of the rotational shaft 66 is inserted through the insertion hole 121. The one end portion of the rotational shaft 66 is rotatably supported by the insertion hole 121 via the first bearing portion 70. The one end of the rotational shaft 66 is located on the one end side with respect to the motor containing portion 118. The second bearing portion 71 is supported on the radially central portion of the cover member 119. A wave washer 123 is disposed between the second bearing portion 71 and the cover member 119.

The reduction gear mechanism 61 includes a first reduction gear 75 and a second reduction gear 76. The first reduction gear 75 is fixedly press-fitted to the rotational shaft 66 of the electric motor 60. The second reduction gear 76 is meshed with this first reduction gear 75. The first reduction gear 75 is formed by a spur gear. Referring to Figs. 2 and 3, the rotational shaft 66 of the electric motor 60 protrudes from the first reduction gear 75 to the one end side. This protrusion portion 66A is formed into a D-like shape in a front view. Referring to Fig. 2, the second reduction gear 76 is formed by a double reduction gear. More specifically, the second reduction gear 76 includes a large gear 81 and a small gear 82. The large gear 81 is disposed on the one end side. The small gear 82 is concentrically and integrally connected to this large gear 81 and is disposed on the other end side.

The large gear 81 of the second reduction gear 76 is meshed with the first reduction gear 75. The small gear 82 of the second reduction gear 76 is meshed with a larger-diameter gear portion 94 of a nut member 86 of the rotation-linear motion conversion mechanism 62, which will be described below. The second reduction gear 76 is rotatably supported by a shaft member 79, which is provided between the motor containing main body 113 and a cover member 115. Then, a rotation from the rotational shaft 66 of the electric motor 60 is transmitted to the nut member 86 of the rotation-linear motion conversion mechanism 62 via the first reduction gear 75 and the second reduction gear 76 of the reduction gear mechanism 61. The reduction gear mechanism 61 is employed as the rotation-linear motion mechanism in the present embodiment, but another transmission mechanism such as a mechanism like a belt and a pulley may be employed.

Referring to Fig. 2, the rotation-linear motion conversion mechanism 62 is a screw mechanism. The rotation-linear motion conversion mechanism 62 includes a slide rod 85 and the nut member 86 threadedly engaged with the slide rod 85. The slide rod 85 includes a head portion 88, an externally threaded portion 89, and a distal end rod portion 90. The head portion 88 is generally cuboidally formed. The externally threaded portion 89 extends continuously from this head portion 88 to the other end side. The distal end rod portion 90 extends continuously from this externally threaded portion 89 to the other end side. The head portion 88 of the slide rod 85 is disposed in a rotation prohibition tubular portion 127. The rotation prohibition tubular portion 127 is provided integrally with the cover member 115, which will be described in detail below, and is formed to have an inner space generally rectangular in cross-section (cross-section orthogonal to the axial direction). Due to that, the slide rod 85 is supported axially movably and non-rotatably around the axis relative to the housing 63. A receiving recessed portion 92 is formed from the distal end surface of the distal end rod portion 90 of the slide rod 85 along the axial direction. The brake cable 93 is coupled in this receiving recessed portion 92. The engagement piece 93A is provided at the distal end of the brake cable 93.

The nut member 86 includes a large-diameter gear portion 94, a large-diameter cylindrical portion 95, a small-diameter nut portion 96, and an annular plate-like portion 97. The large-diameter gear portion 94 is disposed on the one end side. The large-diameter cylindrical portion 95 is disposed on the other end side concentrically whit this large-diameter gear portion 94. The small-diameter nut portion 96 is disposed on the other end side concentrically with this large-diameter cylindrical portion 95. The annular plate-like portion 97 connects the other end of the larger-diameter cylindrical portion 95 and one end of the small-diameter nut portion 96. The large-diameter gear portion 94 of the nut member 86 is meshed with the second reduction gear 76 (the small gear 82) of the reduction gear mechanism 61. An internally threaded portion 100 is formed on the inner peripheral surface of the small-diameter nut portion 96. The externally threaded portion 89 of the slide rod 85 and the internally threaded portion 100 of the small-diameter nut portion 96 of the nut member 86 are threadedly engaged with each other. The small-diameter nut portion 96 of the nut member 86 is rotatably supported in a conversion mechanism containing main body 114 of the housing 63, which will be described in detail below, via a bearing 102.

A containing recessed portion 106 is provided inside the large-diameter cylindrical portion 95 of the nut member 86. A plurality of disc springs 107 and 107 and an annular retainer 108 are contained in the containing recessed portion 106. Each of the disc springs 107 is sandwiched between the retainer 108 and the annular plate-like portion 97 of the nut member 86. A holding member 109 is attached to the opening end side of the containing recessed portion 106. The holding member 109 prevents each of the disc springs 107 and the retainer 108 from being detached off from the containing recessed portion 106. The bellows-like boot 110 is provided on a portion of the slide rod 85 that protrudes from the nut member 86 to the other end side so as to cover this portion. One end portion of the bellows-like boot 110 is connected to the other end portion of the conversion mechanism containing main body 114 of the housing 63. Then, in the rotation-linear motion conversion mechanism 62, a rotation from the rotational shaft 66 of the electric motor 60 is transmitted to the nut member 86 via the reduction gear mechanism 61, thereby causing the slide rod 85 to advance or retract and thus allowing the brake cable 93 to be pulled or paid out. Then, the drum brake 1 can be switched to the braking state or the non-braking state thereof by pulling or paying out the brake cable 93 with the aid of the action of the rotation-linear motion conversion mechanism 62 according to the actuation of the electric actuator 2.

Referring to Fig. 2, the housing 63 includes the motor containing main body 113, the conversion mechanism containing main body 114, and the cover member 115. The motor containing main body 113 contains the electric motor 60. The conversion mechanism containing main body 114 is provided continuously from the motor containing portion 118 of this motor containing main body 113, and contains the rotation-linear motion conversion mechanism 62. The cover member 115 is formed into a shape having a space for containing the reduction gear mechanism 61 on the one end side with respect to the motor containing main body 113, and, further, closes the opening portion of the conversion mechanism containing main body 114 on the one end side. The motor containing main body 113 and the conversion mechanism containing main body 114 are disposed so as to be lined up along the radial direction. The motor containing main body 113 has been already described above, and therefore the detailed description thereof will be omitted here. The conversion mechanism containing main body 114 is formed into a bottomed cylindrical shape in combination with the motor containing portion 118 of the motor containing main body 113.

The nut member 86 of the rotation-linear motion conversion mechanism 62 is rotatably supported in the conversion mechanism containing main body 114 via the bearing 102. An insertion hole 125 is formed through the bottom portion of the conversion mechanism containing main body 114. The other end of the small-diameter nut portion 96 of the nut member 86 is inserted through the insertion hole 125. The slide rod 85 protrudes from this insertion hole 125 to the other end side. On the cover member 115, a rotation prohibition tubular portion 127 is provided concentrically at a position that axially faces the slide rod 85 in a manner protruding to the one end side. The rotation prohibition tubular portion 127 is formed to have an inner space generally rectangular in cross-section (cross-section orthogonal to the axial direction). Then, as described above, the slide rod 85 is supported axially movably and non-rotatably around the axis relative to the housing 63 due to the head portion 88 of the slide rod 85 disposed in this rotation prohibition tubular portion 127. Further, a braking forcible release mechanism 130A according to the first embodiment is provided on the cover member 115 at a position that faces the one end surface of the rotational shaft 66 of the electric motor 60.

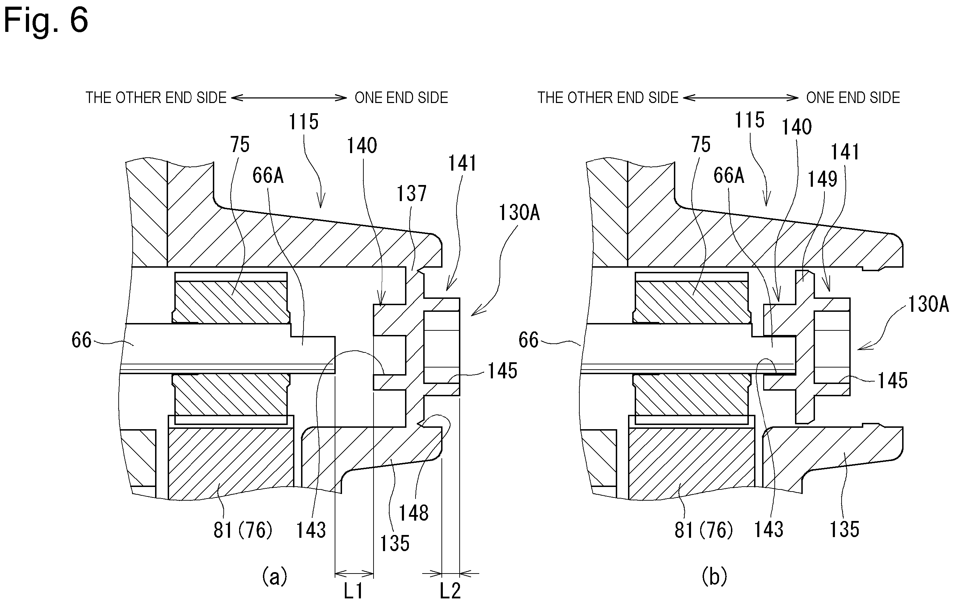

First, the braking forcible release mechanism 130A according to the first embodiment will be described in detail referring to Figs. 4 to 6 and additionally referring to Figs. 2 and 3 as necessary. The present braking forcible release mechanism 130A is integrally molded together with the cover member 115 from synthetic resin. Referring to Figs. 6, an outward protruding cylindrical portion 135 is provided at a portion of the cover member 115 that faces the one end surface of the rotational shaft 66 (the protrusion portion 66A) of the electric motor 60. The present braking forcible release mechanism 130A is integrally connected so as to close an opening of one end of the cylindrical portion 135 provided on the cover member 115 via a thinned portion 137.

Referring to Figs. 6, the present braking forcible release mechanism 130A includes a columnar engagement portion 140 and a columnar operation portion 141. The engagement portion 140 is provided in a manner protruding toward inside the cylindrical portion 135 of the cover member 115. The operation portion 141 is provided in a manner protruding from the cylindrical portion 135 of the cover member 115 outward. Also referring to Figs. 3 and 4, the engagement portion 140 is provided in a manner protruding from a slightly inner position with respect to one end portion of the cylindrical portion 135 of the cover member 115 toward inside this cylindrical portion 135. The engagement portion 140 includes an engagement recessed portion 143 provided on the other end surface. The engagement recessed portion 143 has a D-like shape in a front view. The engagement recessed portion 143 is disposed concentrically with the rotational shaft 66 of the electric motor 60. The protrusion portion 66A of the rotational shaft 66 of the electric motor 60 is relatively non-rotatably engaged with the engagement recessed portion 143. The depth of the engagement recessed portion 143 is set to a shorter size than the axial length of the protrusion portion 66A of the rotational shaft 66.

Both the protrusion portion 66A of the rotational shaft 66 and the engagement recessed portion 143 are formed into a D-like shape in a front view and they are engaged non-rotatably relative to each other in the present embodiment, but this engagement is not limited thereto as long as the protrusion portion 66A of the rotational shaft 66 and the engagement recessed portion 143 are relatively non-rotatably engaged, and, for example, the protrusion portion 66A of the rotational shaft 66 and the engagement recessed portion 143 may be engaged by spline engagement. Alternatively, as another embodiment, the braking forcible release mechanism 130A may be configured in such a manner that, without the protrusion portion 66A formed on the rotational shaft 66, the first reduction gear 75 is provided so as to slightly protrude to the one end side, and the engagement recessed portion 143 is relatively non-rotatably engaged (meshed) directly with the gear portion of the first reduction gear 75.

Referring to Figs. 2, 5, and 6, the operation portion 141 is operable to rotate the rotational shaft 66 relatively non-rotatably engaged with the engagement recessed portion 143. The operation portion 141 is provided in a manner protruding from a slightly inner position with respect to the one end portion of the cylindrical portion 135 of the cover member 115. The operation portion 141 includes an engagement recessed portion 145. For example, a hexagonal wrench or a hexagonal driver (not illustrated), which is a general tool, can be engaged with the engagement recessed portion 145. The engagement recessed portion 145 is provided on one end surface, and is hexagonal in a front view. The engagement recessed portion 145 of the operation portion 141 and the engagement recessed portion 143 of the engagement portion 140 are concentrically positioned. The engagement portion 140 and the operation portion 141 are integrally molded together with the cover member 115 from synthetic resin in the present embodiment, but at least one or both of the engagement portion 140 and the operation portion 141 may be made from ceramic or metal.

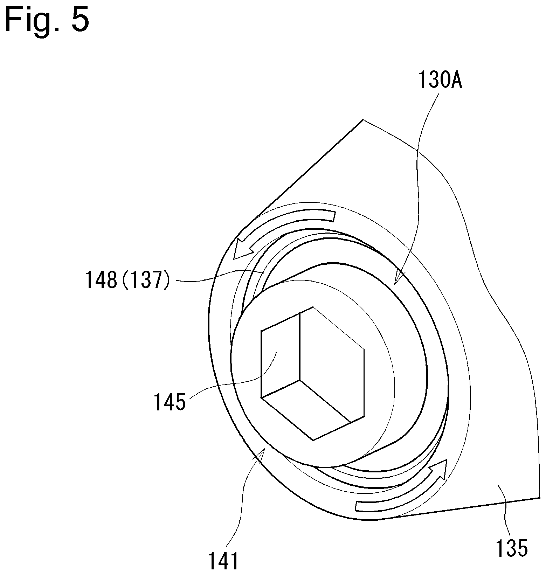

An outer peripheral portion between the operation portion 141 and the engagement portion 140 is integrally molded via the annular thinned portion 137 at a slightly inner position with respect to the one end portion of the cylindrical portion 135 of the cover member 115. The annular thinned portion 137 is realized by forming, for example, a V-shaped annular groove portion 148 on a surface of a wall portion connecting the inner peripheral surface of the cylindrical portion 135 of the cover member 115 on a slightly inner side with respect to the one end portion and the outer peripheral surface between the operation portion 141 and the engagement portion 140. The annular groove portion 148 is provided close to the inner peripheral surface of the cylindrical portion 135 of the cover member 115. Referring to Fig. 5, an arrow indicating an operation direction of the operation portion 141, i.e., a rotational direction of the tool is displayed on a surface of a wall portion around the operation portion 141 of the cover member 115, i.e., the one end surface of the cylindrical portion 135. This arrow indicates a braking release direction of the parking brake. Referring to Figs. 6, a space is provided between the one end surface of the rotational shaft 66 (the protrusion portion 66A) of the electric motor 60, i.e., the end surface of the housing 63 on the cover member 115 side, and the other end surface of the engagement portion 140, i.e., the end surface on the rotational shaft 66 side. A length L1 of this space is set to a larger size than a protrusion length L2 of the operation portion 141.

Then, when some failure has occurred on the electric motor 60 side in a parking brake state, this braking state is forcibly released by the present braking forcible release mechanism 130A according to a procedure that will be described below. First, a worker hits the top surface of the operation portion 141 of the braking forcible release mechanism 130A using a hammer or the like, which is a general tool, so as to press the present braking forcible release mechanism 130A (the engagement portion 140 and the operation portion 141) into the cylindrical portion 135 of the cover member 115 from the state illustrated in Fig. 6(a). As a result, the thinned portion 137 is cut, and the braking forcible release mechanism 130A (the engagement portion 140 and the operation portion 141) is placed into a state of being slightly pressed in the cylindrical portion 135 of the cover member 115.

Referring to Fig. 6(b), when the braking forcible release mechanism 130A (the engagement portion 140 and the operation member 141) is slightly pressed in the cylindrical portion 135 of the cover member 115, the annular cut piece 149 protruding radially outward between the engagement portion 140 and the operation portion 141 of the braking forcible release mechanism 130A is placed along the inner peripheral surface of the cylindrical portion 135, and this restricts the braking forcible release mechanism 130A from moving radially. As a result, the engagement recessed portion 143 of the engagement portion 140 is positioned approximately concentrically with the protrusion portion 66A of the rotational shaft 66, which facilitates engagement therebetween. Further, since the length L1 of the space between the one end surface of the rotational shaft 66 (the protrusion portion 66A) and the other end surface of the engagement portion 140 is set to a larger size than the protrusion length L2 of the operation portion 141, even when the top surface of the operation portion 141 is hit by a hammer or the like and the braking forcible release mechanism 130A (the engagement portion 140 and the operation portion 141) is pressed in the cylindrical portion 135 of the cover member 115, a space is still generated between the other end surface of the engagement portion 140 and the one end surface of the protrusion portion 66A of the rotational shaft 66, contributing to preventing the other end surface of the engagement portion 140 from strongly interfering with the one end surface of the protrusion portion 66A of the rotational shaft 66.

Subsequently, referring to Fig. 6(b), the worker engages the tip portion of the general tool such as a hexagonal wrench or a hexagonal driver with the engagement recessed portion 145 of the operation portion 141, rotates the tool in a forward direction or a reverse direction while finely adjusting it, engaging (relatively non-rotatably engaging) the engagement recessed portion 143, which is provided on the engagement portion 140 and has a D-like shape in a front view, with the protrusion portion 66A of the rotational shaft 66, which has a D-like shape in a front view, and advancing toward the other end side until the bottom surface of the engagement recessed portion 143 of the engagement portion 140 and the one end surface of the rotational shaft 66 contact each other. At this time, the axially entire range of the present braking forcible release mechanism 130A (the engagement portion 140 and the operation portion 141) is disposed in the cylindrical portion 135 of the cover member 115. Then, lastly, when the worker rotates the tool in the braking release direction, i.e., the direction indicated by the arrow displayed on the one end surface of the cylindrical portion 135 of the cover member 115 illustrated in Fig. 5, the rotational shaft 66 of the electric motor 60 is rotated in the braking release direction via the present braking forcible release mechanism 130A (the engagement portion 140 and the operation portion 141) according to the rotation of the tool, and the parking brake is released.

In the above-described electric actuator 2 of the drum brake 1 according to the present embodiment, the cover member 115 (the housing 63), which is a component of the electric actuator 2, includes the braking forcible release mechanism 130A according to the first embodiment. In the parking brake state, the braking forcible release mechanism 130A can forcibly release this braking state into the non-braking state. This braking forcible release mechanism 130A is integrally molded with the cover member 115 (the housing 63) from synthetic resin. Due to this braking forcible release mechanism 130A according to the first embodiment, in the parking brake state, this braking state can be easily forcibly released even when some failure has occurred in the electric moor 60 side. More specifically, the braking forcible release mechanism 130A according to the first embodiment can suppress a cost increase for the structure thereof compared with the conventional technique (the technique disclosed in Japanese Patent Application Laid-Open No. 2019-48587). Further, the braking forcible release mechanism 130A according to the first embodiment eliminates the necessity of a dedicated tool and allows the parking brake state to be forcibly released using a hammer, a hexagonal wrench, or a hexagonal driver, which is a general tool, thereby succeeding in also suppressing a cost increase compared with the conventional technique (the technique disclosed in Japanese Patent Application Laid-Open No. 2019-48587) from this perspective.

Further, the braking forcible release mechanism 130A according to the first embodiment includes the engagement portion 140 relatively non-rotatably engageable with the protrusion portion 66A of the rotational shaft 66 of the electric motor 60, and the operation portion 141 operable to rotate the rotational shaft 66. Then, after the worker cuts off the braking forcible release mechanism 130A from the cover member 115 using a hammer or the like, the provision of the engagement portion 140 and the operation portion 141 of this cutoff member can prevent occurrence of inconvenience due to the broken remains unlike the conventional technique (the technique disclosed in Japanese Patent Application Laid-Open No. 2019-48587), thereby contributing to the improvement of the work efficiency.

Furthermore, the thinned portion 137 is formed around the braking forcible release mechanism 130A according to the first embodiment, which allows the worker to cut off the present braking forcible release mechanism 130A from the cover member 115 easily, i.e., with a weaker force.

Furthermore, the braking forcible release mechanism 130A according to the first embodiment includes the operation portion 141 provided in a manner protruding outward from the cover member 115, thereby allowing the worker to easily visually find the position of the operation portion 141. In addition, the operation direction of the operation portion 141 is indicated by the arrow on the surface of the wall portion (the one end surface of the cylindrical portion 135) around the operation portion 141 of the cover member 115, which allows the worker to easily understand the rotation direction by visually confirming this arrow, improving the work efficiency.

Furthermore, in the braking forcible release mechanism 130A according to the first embodiment, the length L1 of the space between the one end surface of the rotational shaft 66 (the protrusion portion 66A) of the electric motor 60 and the other end surface of the engagement portion 140 is set to a larger size than the protrusion length L2 of the operation portion 141. Due to that, even when the worker hits the top surface of the operation portion 141 with a hammer or the like, which is a general tool, the other end surface of the engagement portion 140 can be prevented from strongly interfering with the one end surface of the rotational shaft 66, and thus the engagement portion 140 can be prevented from incurring damage or the like.

Furthermore, in the braking forcible release mechanism 130A according to the first embodiment, the engagement portion 140 and the operation portion 141 are molded from synthetic resin, or one or both of the engagement portion 140 and the operation portion 141 are made from ceramic or metal as necessary, and this can ensure that the rotation from the tool is transmitted to the rotational shaft 66 of the electric moo 60.

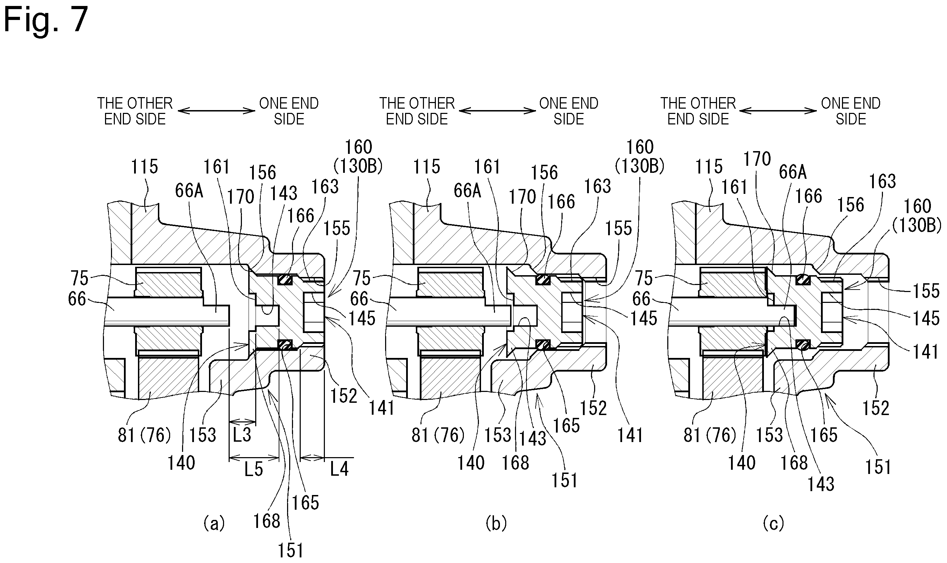

Next, a braking forcible release mechanism 130B of the electric actuator 2 according to a second embodiment will be described in detail based on Figs. 7, referring to Figs. 2 and 3. The braking forcible release mechanism 130B according to the second embodiment is provided on the cover member 115 at a position that faces the one end surface of the rotational shaft 66 (the protrusion portion 66A) of the electric motor 60. A multistep cylindrical portion 151, which protrudes outward, is formed at a portion of the cover member 115 that faces the one end surface of the rotational shaft 66 (the protrusion portion 66A) of the electric motor 60. The multistep cylindrical portion 151 is formed by providing a small-diameter cylindrical portion 152 and a large-diameter cylindrical portion 153 from the one end side toward the other end side. An internally threaded portion 155 is formed in an axial predetermined range of the inner peripheral surface of one end side of the small-diameter cylindrical portion 152. An annular taper surface 156, which increases in diameter toward the other end side, is formed on the inner peripheral surface of the boundary between the small-diameter cylindrical portion 152 and the large-diameter cylindrical portion 153. A columnar body member 160 is disposed in the multistep cylindrical portion 151 axially slidably and rotatably around the axis. This body member 160 corresponds to the braking forcible release mechanism 130B according to the second embodiment.

The body member 160 may be made from synthetic resin, may be made from ceramic, or may be made from metal. The body member 160 includes the engagement portion 140 and the operation portion 141. The engagement portion 140 is located on the other end side. The operation portion 141 is integrally connected to this engagement portion 140, and is located on the one end side. Any one of the engagement portion 140 and the operation portion 141 may be made from ceramic or metal. The engagement portion 140 includes a circular recessed portion 161 and the engagement recessed portion 143. The circular recessed portion 161 is provided on the other end surface of the engagement portion 140, and is circular in a front view. The engagement recessed portion 143 is provided on the bottom surface of the circular recessed portion 161, and has a D-like shape in a front view. The circular recessed portion 161 functions as a guide portion that guides the protrusion portion 66A of the rotational shaft 66 and the engagement recessed portion 143 of the engagement portion 140 to a position where they can be engaged with each other. The protrusion portion 66A of the rotational shaft 66 of the electric motor 60 is relatively non-rotatably engaged with the engagement recessed portion 143. The depth from the other end surface of the engagement portion 140 to the bottom surface of the engagement recessed portion 143 is approximately equal to the axial length of the protrusion portion 66A of the rotational shaft 66. The operation portion 141 includes the engagement recessed portion 145. For example, a hexagonal wrench or a hexagonal driver, which is a general tool, can be engaged with the engagement recessed portion 145. The engagement recessed portion 145 is provided on the one end surface, and is hexagonal in a front view.

An externally threaded portion 163 is formed on the body member 160, i.e., in an axial predetermined range of the outer peripheral surface of the one end side of the operation portion 141. An annular groove portion 165 is formed on the outer peripheral surface on the other end side with respect to the externally threaded portion 163. A seal member 166 is fitted to this annular groove portion 165. An annular flange portion 168, which protrudes radially outward, is provided on the body member 160, i.e., the outer peripheral surface of the opposite end of the engagement portion 140. The outer diameter of the annular flange portion 168 is set to a size larger than the inner diameter of the small-diameter cylindrical portion 152 and smaller than the inner diameter of the large-diameter cylindrical portion 153. The annular flange portion 168 is formed triangularly in cross-section. One end surface of the annular flange portion 168 is formed on an annular taper surface 170 gradually reducing in diameter toward the one end side.

Then, under normal conditions, referring to Fig. 7(a), the externally threaded portion 163 of the body member 160 is threadedly engaged with the internally threaded portion 155 of the small-diameter cylindrical portion 152 of the multistep cylindrical portion 151, and the one end surface of the small-diameter cylindrical portion 152 and the one end surface of the body member 160 (the operation portion 141) are in alignment with each other. At this time, the body member 160 is restricted from moving relative to the multistep cylindrical portion 151 to the one end side due to abutment of the annular taper surface 170 of the annular flange portion 168 of the body member 160 with the annular taper surface 156 provided on the inner peripheral surface between the small-diameter cylindrical portion 152 and the large-diameter cylindrical portion 153 of the multistep cylindrical portion 151. Further, the outer peripheral surface of the body member 160 and the inner peripheral surface (the other end side with respect to the internally threaded portion 155) of the small-diameter cylindrical portion 152 are in close contact with each other via the seal member 166. As a result, the air tightness in the housing 63 (refer to Fig. 2) is maintained.

Further, in this state, a length L3 of a space between the one end surface of the rotational shaft 66 (the protrusion portion 66A) of the electric motor 60, i.e., the end surface of the housing 63 on the cover member 115 side, and the bottom surface of the circular recessed portion 161 of the engagement portion 140 of the body member 160 exceeds a length (axial length) L4 of the threaded engagement between the internally threaded portion 155 of the cover member 115 and the externally threaded portion 163 of the body member 160. Furthermore, in this state, naturally, a length L5 of a space between the one end surface of the rotational shaft 66 (the protrusion portion 66A) of the electric motor 60, i.e., the end surface of the housing 63 on the cover member 115 side and the bottom surface of the engagement recessed portion 143 of the body member 160 exceeds the length (axial length) L4 of the threaded engagement between the externally threaded portion 163 of the body member 160 and the internally threaded portion 155 of the small-diameter cylindrical portion 152 of the multistep cylindrical portion 151.

Next, when some failure has occurred on the electric motor 60 side in a parking brake state, this braking state is forcibly released by the present braking forcible release mechanism 130B according to a procedure that will be described below. First, referring to Fig. 7(b), the worker engages the tip portion of the general tool, such as a hexagonal wrench or a hexagonal driver, with the engagement recessed portion 145 of the operation portion 141 of the body member 160, which is a component of the present braking forcible release mechanism 130B, and rotates the tool in a direction for advancing the body member 160 to the other end side. Then, when the body member 160 advances relative to the multistep cylindrical portion 151 to the other end side, and the externally threaded portion 163 of the body member 160 is disengaged from the internally threaded portion 155 of the small-diameter cylindrical portion 152, the engagement recessed portion 143 of the body member 160 (the engagement portion 140) and the protrusion portion 66A of the rotational shaft 66 of the electric motor 60 are guided by the circular recessed portion 161 of the engagement portion 140 to the position where they can be engaged, i.e., guided so as to be located approximately concentrically.

At this time, a space is still present between the bottom surface of the circular recessed portion 161 of the body member 160 (the engagement portion 140) and the one end surface of the rotational shaft 66 (the protrusion portion 66A) of the electric motor 60, and the body member 160 is rotatably supported in the small-diameter cylindrical portion 152 of the multistep cylindrical portion 151. Therefore, referring to Fig. 7(c), the worker engages the engagement recessed portion 143 of the body member 160 (the engagement portion 140) with the protrusion portion 66A of the rotational shaft 66 by rotating the tool in the forward direction or the reverse direction while finely adjusting it. After that, the worker slightly pushes in the tool to advance the body member 160 to the other end side, thereby bringing the bottom surface of the engagement recessed portion 143 of the engagement portion 140 and the one end surface of the rotational shaft 66 into contact with each other.

At this time, the other end surface of the body member 160 (the engagement portion 140) is in abutment with the one end surface of the first reduction gear 75. Further, the one end portion of the externally threaded portion 163 of the body member 160 (the operation portion 141) is located in the axial range of the small-diameter cylindrical portion 152 of the multistep cylindrical portion 151. Then, lastly, when the worker rotates the tool in the braking release direction (the direction indicated by the arrow displayed on the one end surface of the cylindrical portion 135 of the cover member 115 illustrated in Fig. 5) in the state illustrated in Fig. 7(c), the rotational shaft 66 of the electric motor 60 is rotated in the braking release direction via the body member 160 according to the rotation of the tool, and the parking brake is released.

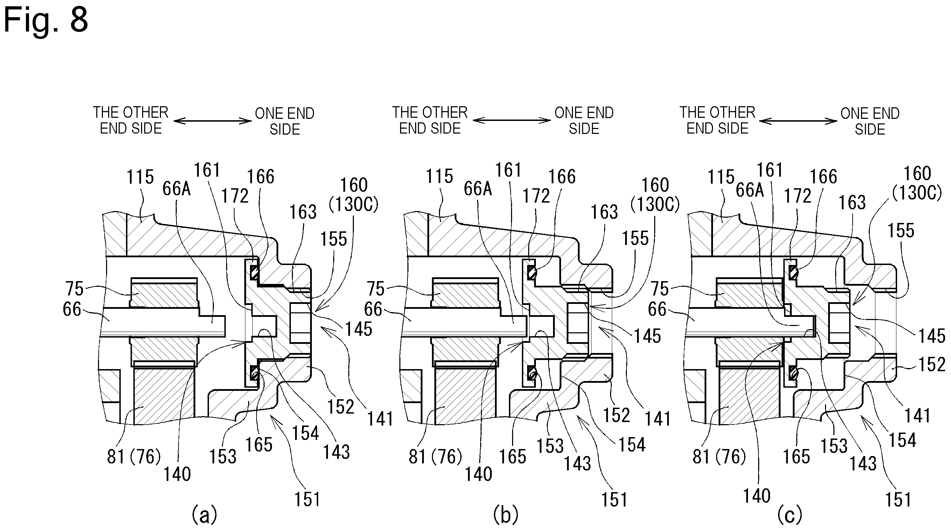

Next, a braking forcible release mechanism 130C of the electric actuator 2 according to a third embodiment will be described in detail based on Figs. 8. The braking forcible release mechanism 130C according to third embodiment will be described focusing only on differences from the braking forcible release mechanism 130B according to the second embodiment.

The body member 160 corresponding to the braking forcible release mechanism 130C according to the third embodiment includes a sealing flange portion 172 on the other end of the engagement portion 140 without including the annular flange portion 168 of the body member 160 corresponding to the braking forcible release mechanism 130B according to the second embodiment. The sealing flange portion 172 protrudes radially outward, and has an annular plate-like shape. An annular groove portion 165 is formed on one end surface of the sealing flange portion 172. A seal member 166 is fitted to this annular groove portion 165.

Then, the sealing flange portion 172 of the body member 160 is in close contact with a stepped portion 154 between the small-diameter cylindrical portion 152 and the large-diameter cylindrical portion 153 of the multistep cylindrical portion 151 via the seal member 166. As a result, the air tightness in the housing 63 (refer to Fig. 2) is maintained. Further, the body member 160 is restricted from moving relative to the multistep cylindrical portion 151 to the one end side with the aid of the abutment of the sealing flange portion 172 with the stepped portion 154. The other structures and functions of the braking forcible release mechanism 130C according to this third embodiment are similar to the braking forcible release mechanism 130B according to the second embodiment, and therefore the descriptions thereof will be omitted here.

In the above-described manner, the braking forcible release mechanisms 130B and 130C according to the second and third embodiments are formed by the body member 160 that is a separate member from the cover member 115, thereby allowing the body member 160 to be removed from the cover member 115, in other words, detachably attached to the cover member115. This eliminates the necessity of partially breaking the cover member 115 when some failure has occurred on the electric motor 60 side in the parking brake state and this braking state is forcibly released, thereby allowing the same cover 115 to be used again after a faulty portion on the electric motor 60 side is repaired, thus contributing to a reduction in the repair cost.

Further, the braking forcible release mechanisms 130B and 130C according to the second and third embodiments include the circular recessed portion 161 as the guide portion on the one end surface of the engagement portion 140 of the body member 160, thereby being able to easily guide the engagement recessed portion 143 and the protrusion portion 66A to the position where they can be engaged with each other when the engagement recessed portion 143 of the body member 160 (the engagement portion 140) and the protrusion portion 66A of the rotational shaft 66 of the electric motor 60 are placed axially close to each other.

Further, the braking forcible release mechanisms 130B and 130C according to the second and third embodiments employ the rotation-linear motion conversion mechanism (the screw mechanism) in which the internally threaded portion 155 of the small-diameter cylindrical portion 152 of the cover member 115 and the externally treaded portion 163 of the body member 160 are threadedly engaged, thereby being able to simplify the structure thereof.

Furthermore, in the braking forcible release mechanisms 130B and 130C according to the second and third embodiments, the length L5 of the space between the one end surface of the rotational shaft 66 (the protrusion portion 66A) of the electric motor 60 and the bottom surface of the engagement recessed portion 143 of the body member 160 is set to a larger size than the length L4 of the threaded engagement between the internally threaded portion 155 of the cover member 115 and the externally threaded portion 163 of the body member 160 under normal condition. As a result, when the parking brake is forcibly released, the engagement recessed portion 143 of the body member 160 is prevented from incurring damage because the bottom surface of the engagement recessed portion 143 of the body member 160 does not interfere with the one end surface of the rotational shaft 66 of the electric motor 60 at a stage before the body member 160 is rotated to be advanced relative to the multistep cylindrical portion 151 to the other end side to cause the externally threaded portion 163 of the body member 160 to be disengaged from the internally threaded portion 155 of the small-diameter cylindrical portion 152, i.e., in the middle of the advancement of the body member 160 to the other end side.

Further, under normal conditions, the length L3 of the space between the one end surface of the rotational shaft 66 (the protrusion portion 66A) of the electric motor 60 and the bottom surface of the circular recessed portion 161 of the body member 160 is set to a larger size than the length L4 of the threaded engagement between the internally threaded portion 155 of the cover member 115 and the externally threaded portion 163 of the body member 160. As a result, when the parking brake is forcibly released, the protrusion portion 66A of the rotational shaft 60 is not yet engaged in the engagement recessed portion 143 of the body member 160 at the time point that the body member 160 is rotated to be advanced relative to the multistep cylindrical portion 151 to the other end side to cause the externally threaded portion 163 of the body member 160 to be disengaged from the internally threaded portion 155 of the small-diameter cylindrical portion 152. Therefore, rotating the tool in the forward direction or the reverse direction while finely adjusting it immediately after the disengagement allows the engaged recessed portion 143 of the body member 160 to be easily engaged with the protrusion portion 66A of the rotational shaft 66, improving the work efficiency.

The present embodiments employ the configuration in which the electric actuator 2 is directly attached to the backplate 4 of the drum brake 1, but may be configured in such a manner that the electric actuator 2 is attached to a vehicle body structure located near the drum brake 1 via a bracket or the like.

Further, the electric actuator 2 is employed for the drum brake 1 serving as an electric brake apparatus in the above-described present embodiments, but may be employed for a disk brake.

The present invention shall not be limited to the above-described embodiments, and includes various modifications. For example, the above-described embodiments have been described in detail to facilitate a better understanding of the present invention, and the present invention shall not necessarily be limited to the configuration including all of the described features. Further, a part of the configuration of some embodiment can be replaced with the configuration of another embodiment. Further, some embodiment can also be implemented with a configuration of another embodiment added to the configuration of this embodiment. Further, each embodiment can also be implemented with another configuration added, deleted, or replaced with respect to a part of the configuration of this embodiment.

The present application claims priority under the Paris Convention to Japanese Patent Application No. 2023-124478 filed on July 31, 2023. The entire disclosure of Japanese Patent Application No. 2023-124478 filed on July 31, 2023 including the specification, the claims, the drawings, and the abstract is incorporated herein by reference in its entirety.

### REFERENCE SIGNS LIST

- 1: drum brake (electric brake apparatus)
- 2: electric actuator
- 60: electric motor
- 62: rotation linear-motion conversion mechanism
- 65: main body portion
- 66: rotational shaft (rotational member)
- 63: housing
- 115: cover member (housing)
- 130A to 130C: braking forcible release mechanisms according to first to third embodiments
- 137: thinned portion
- 140: engagement portion
- 141: operation portion
- 143: engagement recessed portion
- 155: internally threaded portion
- 160: body member
- 161: circular recessed portion (guide portion)
- 163: externally threaded portion

## Claims

1. An electric brake apparatus comprising:
an electric motor;
a rotational member to which a rotation from the electric motor is transmitted;
a rotation-linear motion conversion mechanism configured to allow the electric brake apparatus to be switched to a braking state or a non-braking state by converting a rotation from the rotational member into a linear motion; and
a housing containing the rotational member,
wherein the housing includes a braking forcible release mechanism capable of forcibly releasing the braking state into the non-braking state.

2. The electric brake apparatus according to claim 1, wherein the braking forcible release mechanism is molded integrally with the housing.

3. The electric brake apparatus according to claim 1, wherein the braking forcible release mechanism includes
an engagement portion relatively non-rotatably engageable with the rotational member, and
an operation portion operable to rotate the rotational member.

4. The electric brake apparatus according to claim 1, wherein the braking forcible release mechanism is provided detachably from the housing.

5. The electric brake apparatus according to claim 3, wherein a guide portion is provided on the engagement portion, the guide portion being configured to guide an engagement recessed portion of the engagement portion and the rotational member to a position where they can be engaged with each other.

6. The electric brake apparatus according to claim 3, wherein the operation portion is engaged with a tool.

7. The electric brake apparatus according to claim 1, wherein the rotational member is a rotational shaft of the electric motor.

8. The electric brake apparatus according to claim 3, wherein both the engagement portion and the operation portion are molded from synthetic resin, or any one or both of the engagement portion and the operation portion is/are made from ceramic or metal.

9. The electric brake apparatus according to claim 3, wherein an operation direction of the operation portion is displayed on the housing.

10. The electric brake apparatus according to claim 1, wherein the housing and the braking forcible release mechanism are integrally molded from synthetic resin, and
wherein a thinned portion is formed between the housing and the braking forcible release mechanism.

11. The electric brake apparatus according to claim 3, wherein the operation portion is provided in a manner protruding outward from the housing.

12. The electric brake apparatus according to claim 11, wherein a space is provided between an end surface of the rotational member on the housing side and an end surface of the engagement portion on the rotational member side, and
wherein a length of the space is set to a larger size than a protrusion length of the operation portion.

13. The electric brake apparatus according to claim 1, wherein the braking forcible release mechanism is configured as a separate member from the housing.

14. The electric brake apparatus according to claim 1, wherein the housing and the braking forcible release mechanism are threadedly engaged with each other at respective threaded portions.

15. The electric brake apparatus according to claim 14, wherein a space is provided between an end surface of the rotational member on the housing side and a bottom surface of an engagement recessed portion, the engagement recessed portion being provided on the engagement portion and engageable with the rotational member, and
wherein a length of the space is set to a larger size than an axial length of the threaded portions.
